# EUROPEAN PATENT APPLICATION

(11) **EP 4 439 201 A1**
(43) Date of publication of application: **02.10.2024**
(21) Application number: 23165082.1
(22) Date of filing: 29.03.2023
(51) Int. Cl.: G05B 15/02, G06Q 50/16

(54) **METHOD FOR AUTOMATICALLY COMPUTING THE AUTOMATION CAPABILITIES OF A BUILDING**

(71) Applicant: Siemens Schweiz AG, 8047 Zürich (CH)
(72) Inventor: Xavier Parreira, Josiane, 1110 Wien (AT); Bischof, Stefan, 1080 Wien (AT); Fernbach, Andreas, 3370 Ybbs an der Donau (AT); Krammer, Lukas, 1220 Wien (AT)
(74) Representative: Siemens Patent Attorneys

(57) **Abstract**

The present invention discloses a Method for automatically computing the automation capabilities of a building;
said method comprises the steps of:
i) providing a plurality of SRI calculation rules and creating a performance semantic model from said plurality of SRI calculation rules;
ii) creating a building sematic model and retrieving mappings between the performance semantic model and the building semantic models and optionally adding information about building's documentation to the retrieved mappings;
iii) providing a building digital representation for the existing building, said building digital representation being in the form of a semantic building model;
iv) computing a partial performance model for the retrieved matches by using the available digital building representation to automatically retrieve building's capabilities that are relevant for the SRI computation;
iv) providing a guided user interface for completing the computation for building services that are not found in the digital building representation; and
v) computing and reporting the SRI calculation, the scores at the different impact criteria and preferably as well as a justification for each score.

Thus, the present invention paves a way allowing for automatically computing the capabilities of a building in terms of automation and autonomy additionally guiding a Smart Readiness Indicator (SRI) score assessment for non-digitally available information (e.g. documents/schemas/plans) which finally leads to complete SRI computation for existing buildings. Since the method now facilitates to automatically compute scores for at least a subset of the services, a system can periodically recompute the performance of a large number of buildings and can offer an actual status of a fleet of buildings in terms of automation and autonomy. The guide for experts helps to compute the final SRI scores of buildings by helping in finding the information for the missing scores which results in a significant reduction in the time needed for getting a clear picture of the building performance.

## Description

The present invention relates to a method for automatically computing a building's automation and autonomy capabilities in various areas. The method uses available data out of the building automation system and other building-related data sources for the computation and offers the results to higher-level systems (e.g., building fleet management system).

Buildings usually have a long lifecycle and need to adapt and improve over time. However, in many cases, this adaptation and improvement (especially in the case of technical building equipment such as HVAC, lighting, and security) requires a change in hardware or a sophisticated and expensive adaptation of the automation system. Even if the hardware does not need to be replaced, the effort for adapting the software is significant.

Currently, there is a trend to weaken the dependency between hardware and software by cloud and edge technologies. For example, edge devices and the respective connectivity to a cloud platform typically offer a runtime- and system management environment for easy deployment of new applications, without any need of on-site actions.

In such an environment, it is possible to check the applicability of new software services to specific building automation systems to improve their capabilities in terms auf automation and autonomy. These improvements directly influence performance indicators such as energy efficiency.

The potential of smart technologies in the building sector was heavily emphasized in the 2018 revision of the European Energy Performance of Buildings Directive (EPBD). Within this revision, the concept of this Smart Readiness Indicator (SRI) was introduced. This indicator allows for rating the smart readiness of buildings, i.e., the capability of buildings (or building units) to adapt their operation to the needs of the occupant, also optimizing energy efficiency and overall performance, and to adapt their operation in reaction to signals from the grid (energy flexibility). The smart readiness indicator (SRI) aims to raise awareness amongst building owners and occupants of the value behind building automation and electronic monitoring of technical building systems and should give confidence to occupants about the actual savings of those new enhanced functionalities. The SRI is a key performance indicator for the overall performance of a building and is one aspect for defining a building's value.

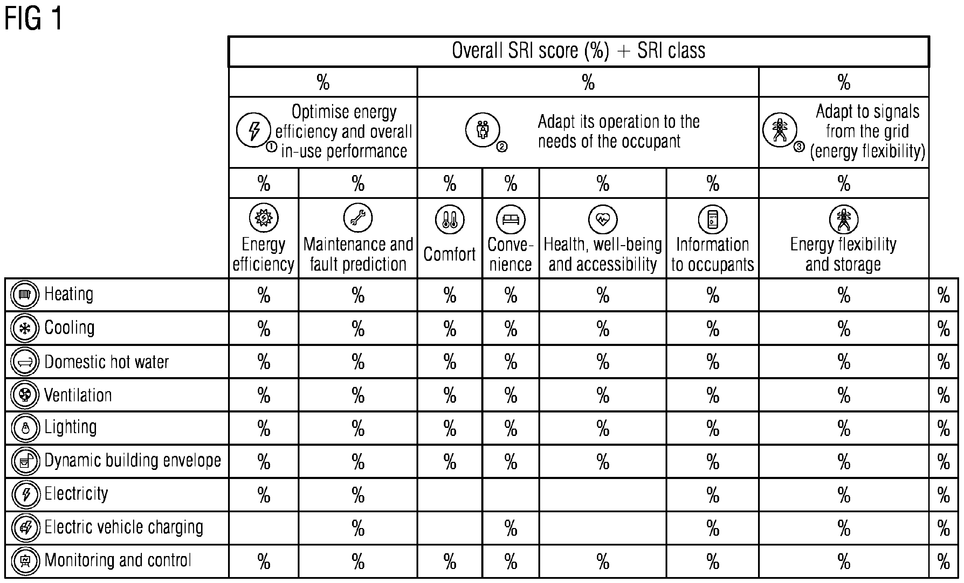

To this end, the European Commission released a practical guide for SRI calculation. The smart readiness score of a building or building unit is expressed as a percentage which represents the ratio between the smart readiness of the building or building unit compared to the maximum smart readiness that it could reach. An SRI calculation sheet helps the assessor in carrying out the assessment, calculating the intermediate scores at domain/impact level, and weight those to a final single score. An overview of the SRI scoring matrix is shown in Figure 1.

The calculation sheet as shown in Figure 1 provides the list of all building services that have been identified as relevant to the SRI calculation. In the current version of the SRI calculation sheet, there is a total of 54 services defined. These are group into 9 different domains, listed below:
1. Heating
2. Cooling
3. Domestic hot water
4. Ventilation
5. Lighting
6. Dynamic building envelope
7. Electricity
8. Electric vehicle charging
9. Monitoring and control

Services are assigned different scores for different impact criteria. Currently, there are 7 defined impact criteria:
1. Energy efficiency
2. Maintenance and fault prediction
3. Comfort
4. Convenience
5. Health, well-being, and accessibility
6. Information to occupants
7. Energy flexibility and storage

For example, for the service "H-1a: Heat emission control" the functionality levels are defined as:
Level 0: No automatic control.
Level 1: Central automation control (e.g., central thermostat). Level 2: Individual room control (e.g., thermostatic valves, or electronic controller).
Level 3: Individual room control with communication between controllers and to Building Automation and Control Systems (BACS) .
Level 4: Individual room control with communication and occupancy detection

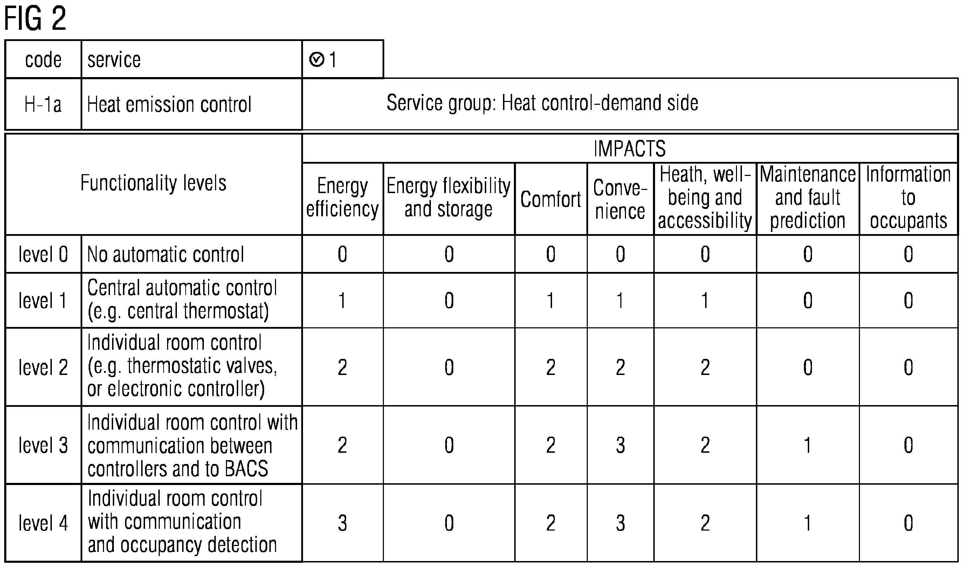

The scores for each level can be seen in a snipped of the calculation sheet shown in Figure 2.

Prior to the assessment, the assessor should indicate whether a certain service is applicable to a particular building. Services that are not applicable will not be considered in the SRI calculation. The assessment itself consists of specifying, for each relevant service, its functionality level.

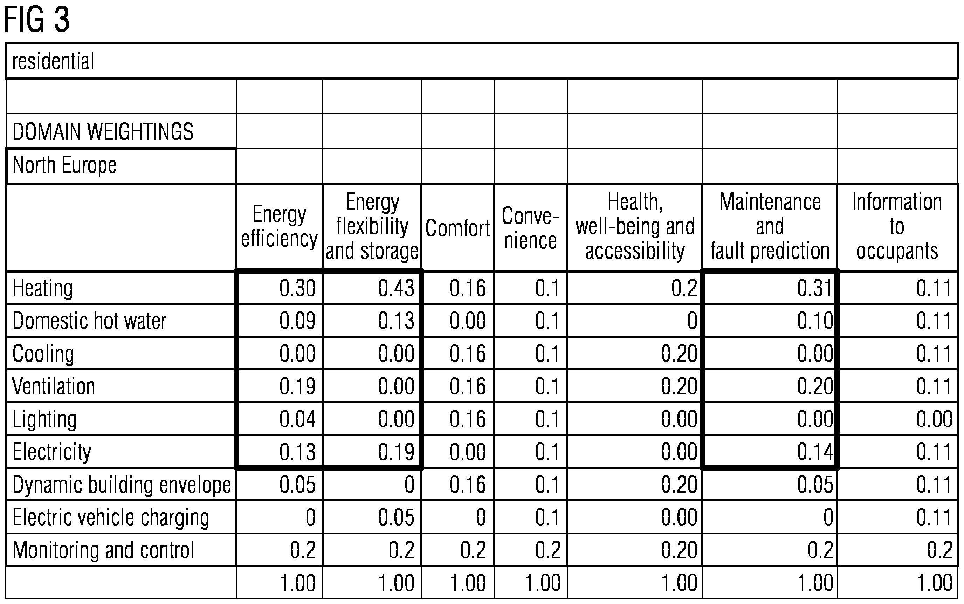

In addition, the assessor needs to specify different building properties, such as building type (e.g., single family house or office building) and location. These will determine the weights of the different SRI criteria. Figure 3 shows the impact weights for residential buildings in northern Europe.

Once the functionality level of each relevant service and the impact weight matrix have been determined, the SRI calculation sheet will compute the SRI scoring matrix. The computation consists of aggregating the service scores for each domain and multiplying them by their respective weight. Impact scores are further aggregated to generate the overall SRI scores, as shown in Figure 1.

While the SRI pure computation of the final score is automated, the individual SRI services assessment itself is currently only possible via manual inspection. An assessor, who is an expert in the domain, needs to inspect documents, specifications, systems or even the real building on site to determine the relevant services and their functionality levels. The Directorate-General for Energy European Commission estimates that such assessment can take ½ to 1 day of work, depending on the number of services and the complexity of the building. Only a certified assessor can issue an official SRI score certificate.

For many applications it is not necessary to have the final score of the SRI, but to have detailed knowledge about selected domains (e.g., energy efficiency) or more specifically of specific sub systems (e.g., ventilation system).

Rather, it is desired to have (periodic) timely updates of the domains/services of interest. For example, higher-level systems for managing fleets of buildings need an accurate, timely and most importantly machine-readable computation of a building's capabilities in order to decide on the upgrade or improvement methods.

Therefore, it is the objective of the present invention to provide a method for automatically computing key capabilities of a building in terms of automation and autonomy. As the Smart Readiness Indicator covers the whole range of functions of a building, the structure and notation of this upcoming standard is adopted.

This objective is achieved according to the present invention by a method for automatically computing the automation capabilities of a building, said method comprises the steps of:
i) gathering information about a building from the building automation system on site or from data sources outside the building (e.g., commercial information, plain-text documentation) comprising the selection of the necessary information
ii) creating a non-contradicting building sematic model based on the selected information of a building based on various sets methods, depending on the source and type of data (e.g., technical, commercial)
iii) creating a template of a performance semantic model which contains a structure for describing the building functions in accordance with the SRI (i.e., domains, services, levels).
iv) providing a set of rules allowing for identifying the relevant services of the performance semantic model taking a description of the functionality and respective requirements into consideration
v) applying the set of semantic rules for retrieving mappings between the building semantic model and the template of the performance semantic models and adding information about building's documentation to the retrieved mappings (i.e., explanation, justification);
vi) thus, computing a performance semantic model containing the automation and autonomy capabilities of a building;
vii) optional: if there are uncertainties or services cannot be computed: providing a guided user interface for reviewing/completing the computation of the performance semantic model by using a set of rules in combination with the building semantic model to give hints where to find the necessary information (e.g., specific documents, systems);
viii) computing the SRI calculation, the scores at the different impact criteria and preferably as well as a justification for each score.
ix) offer an interface to external systems such that the performance semantic model is exposed and finally integrated into a higher-level system (e.g., fleet level).

Thus, the present invention describes a system allowing for automatically computing and optionally guiding the computation of the automation capabilities of a building of a fllet of buildings, according to the structure of the Smart Readiness Indicator (SRI). This includes the acquisition, selection, and transformation of necessary data of different types of systems.

Further, preferred embodiments of the present invention are listed in the attached dependent claims.

Preferred embodiments of the present invention are hereinafter described in more detail with reference to the attached drawings which depict in:
- Figure 1: an overview of the SRI scoring matrix for assessment of a building's smart readiness in terms of an SRI calculation sheet;
- Figure 2: a Snipped of the SRI calculation sheet;
- Figure 3: an example of an SRI weight matrix; and
- Figure 4: flowchart of the data/information in the method according to the present invention.

The present invention provides a method for automatically computing KPIs regarding a building's automation capability.

In particular, the method comprises a number of relevant steps for this purpose:
i) creates a template for a performance semantic model related to the SRI services;
ii) creates mappings between the performance and building models and adds information about building's documentation;
iii) computes a performance model containing the relevant SRI services by using available digital building representations to automatically discover building's capabilities;
iv) provides a guided user interface that guides the user to specific documents/schemas/plans of a building where the relevant information for completing the computation can be found (for the relevant information not found in the digital representation);
v) computes the final automation capabilities, the scores at the different impact criteria as specified in the SRI definition, as well as the justification for each score; and
vi) makes all the results for multiple buildings available in a dashboard, which allows for a periodic re-computation, a modification of the different impact criteria and a ranking of the different buildings according to their scores.

A template for a building semantic model (a.k.a. digital building representation), based on semantic models, offers a representation which is structured and machine-readable. For this purpose, semantic models have become state-of-the-art in recent years. The applicant's solution in this regard requires a building representation following a domain model for buildings based on semantic web technologies. There are several models available such as Siemens BTDom, BRICK, SAREF4BLDG. However, it is important to have the right concepts available which can be achieved by using a combination of existing models and their concepts and adding additional concepts and relations if necessary. The Siemens BTDom model is such a combined model created by the "Domain Modelling @ BT" initiative. BTDom already includes models for assets (building equipment), location (geometry) and even function models (containing functions and datapoints). Being an ontology model, it can also be easily extended to include further classes and properties. The invention can easily be extended to also support other building models, such as BRICK and SAREF4BLDG.

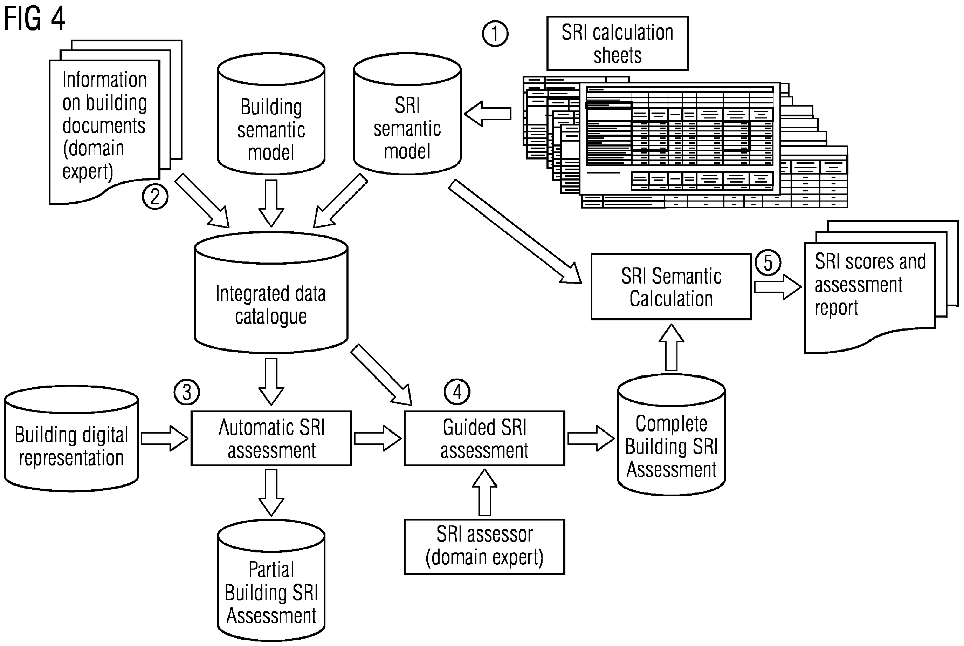

The flow of data/information in the method according to the present invention is illustrated in Figure 4. For its initialization at step 1, it requires the semantic building model (e.g., BTDom) and the SRI calculation sheet (the latter is provided by the European Union). Moreover, information on available building documentation and standards followed is also required, preferably in terms of the semantic model. The latter is useful for the guided step, as it will be explained further below. For the computation phase, the present invention takes as input a digital representation of a building (following the building model in use) and a domain expert knowledge for the guided computation.

To integrate and compare the building model with the SRI information, the invention creates and stores a semantic representation of the SRI calculation sheet (step 1). In this step, the method i) parses the calculation sheets to extract the information about services (e.g., domain, functionality levels, and impact scores) as well as the weight matrices, and ii) maps the information into the performance semantic models defined by the method. For this example, one can rely on the Resource Description Framework (RDF) and the SPARQL Protocol and RDF Query Language (SPARQL) for the semantic models and query formats, respectively (BTDom also follows these formats). RDF and SPARQL are the de facto W3C standard for semantic representation and querying.

The performance semantic model is an extension of the DataCube ontology (www.w3.org/TR/vocab-data-cube/) to represent the SRI calculation matrices. Examples of data represented following the performance semantic model is shown in Listing 1. Line 1 states that heating-H1a, heating-H2a and colling-C1a are services.

**Listing 1 - Example of data following the performance semantic model format**

| | |
|---|---|
| 1. | sri:heating-S1 a sri:Service . sri:heating-S2a a sri:Service . sri:cooling-S1 a sri:Service. |
| 2. | sri:heating a sri:Domain ; sri:hasPart sri:heating-H1a , sri:heating-H2a . sri:cooling a sri:Domain; |
| 3. | sri:hasPart sri:cooling-C1a. |
| 4. | sri:ohs10 a qb:Observation ; qb:dataSet sris:scoresDS ; sri:function sri:heating-H1a ; sri:level |
| 5. | sri:level0 ; sri:impact sri: energy Efficiency ; sri:score0. |
| 6. | sri:ohs11 a qb:Observation ; qb:dataSet sris:scoresDS ; sri:function sri:heating-H1a ; sri:level |
| 7. | sri:level1 ; sri:impact sri: energy Efficiency ; sri:score 1. |

Lines 2-3 specifies the heating and cooling are domains, and that the first two services belong to the heating domain, while the latter to the cooling domain. Using the DataCube notation, lines 4-7 tells us that, for the impact "energy efficiency", the heating-H1a services has a score 0 at level 0 and a score 1 at level 1 (as also shown in Figure 2).

With both the building and the SRI models in place, the method according to the present invention proceeds into mapping the different SRI service's functionality levels to concepts in the building model (step 2). To this end the present invention i) looks at the description of service functionality level, ii) identifies which building equipment or function is needed to support that level, iii) looks for the equipment representation on the building model, and iv) stores the connection (i.e., link) between the functionality level and the equipment.

As mentioned earlier, here the BTDom model is currently being considered, but this step can be adapted to other comparable building models as well. For instance, for the heating H-1a service example, if the building model contains the concept of a "Thermostat" equipment, the framework will link this concept to the service functionality level 1. If the building model does not offer a representation for a particular equipment or function, this is added to the model, followed by its connection to the functionality level.

Still in this step, the knowledge about building's documents and standards is modeled. Building services are defined in different norms, like the EN ISO 16484-3 for general building functions or the national German VDI-Richtlinie 38-13 for room automation functions. For the equipment and functions mentioned above, i.e., the ones relevant to the SRI computation, an additional link to the name of the document is created in which a definition of equipment or function can be found. This is particularly useful to guide experts in determining the correct level computation for the services not found in a building digital representation (details below). Besides data of an automation system,

Once step 2 is completed, the method/framework is ready for the computation of the automation capabilities according to the SRI services. It first starts with the automatic computation (step 3). This step takes as input the digital representation of the building and the mappings created in step 2. The automatic computation is done by means of SPARQL queries against the digital building representation. Preferably, the method maintains a catalog of SPARQL queries that look for the required equipment and functions in the digital representation.

For each service functionality level this step will i) retrieve the relevant SPARQL query from its catalog, ii) execute the query against the digital representation, and iii) store the results. For each service, the highest functionality level found in the digital representation according to the SRI is considered. If all queries for a service failed to provide results, the service cannot be subject to automatically computation, and its functionality level must be determined at by guiding the user by means of suggesting specific documents/schemas/plans where the necessary information in contained.

The output of this step is a semantic representation of the buildings automation capabilities following the SRI services definitions. The quality of this automatic computation depends on the amount of information present in the building model. While a full computation (w.r.t. the SRI) is possible if the digital building representation comprises all relevant SRI information, in practice it is sufficient that the most relevant services' functionality levels are discoverable (mainly focusing on automation and autonomy). Especially if information is derived from a legacy automation system, mainly functional information is available (e.g., BACnet BA Model). With the increasing importance of building models to different applications within and beyond the building domain (e.g., smart grids and smart cities), it is expected that digital building representations becomes more and more complete, thus reducing the SRI assessment time even further.

For improving the performance computation, the framework requires the support of a human that processes the non-digitally available information. For this purpose, a graphical UI provides the human expert a guided process for assessing the open parts (at step 4). Besides guiding through the computation of the remaining services, it also allows for reviewing the automatically computed services by providing a justification.

This process is dynamically defined based on i) the automatic computation (i.e., the outcome of step 3), and ii) the available information from the building model and documentation (i.e., the outcome of step 2).

The guided performance computation starts by identifying the building capabilities (SRI services) which could not be automatically processed. For each missing service, the framework performs the following tasks:
If the service is related to a hardware component, it queries its catalogue for the related building documentation and recommends those to the expert for further inspection.

Additionally, it queries the building model for related content about the equipment, such as superior systems in the technical hierarchy. For example, for a thermostat, possible superior systems are heat pumps, heating generators and heating systems. It then looks for instances of these higher concepts in the digital building representation and it presents them to the expert, along with additional information such as physical location.

If a service is related to a software component, no additional information is presented.

The outcome is a list of services, their requirements, and recommendations on where they can be found. This is then used to guide the expert in correctly and efficiently filling out the missing items. With this information and the guided UI, the expert can:
i) check the suggested documentation for hardware or any other function that is presented in the building but missing from the building digital representation.
ii) confirm that hardware/function has been found, which would trigger an SRI assessment for the respective service, and consequently an update of the overall performance model;
iii) manually enter the functionality level for a service (especially useful for software-related services), which directly adds the information to the overall performance computation.

In addition, services for which an automatic computation was possible are also displayed to the expert, along with their scores and the explanation for the decision. This contains a detailed list of equipment/functions that support the scores. Thereby, the graphical UI provides a full overview of the performance computation, also in comparison to other buildings.

With the guided performance computation providing recommendations on where to look for the missing information, experts should take considerably less time in finishing the building assessment. If the expert has completed the assessment for all the relevant services in the SRI catalogue, the result is a complete SRI assessment, which is used for the actual performance computation.

The performance semantic model computation (step 5) takes the building model (i.e., outcome of step 4) and the performance semantic models (step 1) and automatically computes the building performance automation, which corresponds to the SRI score in case all SRI services were computed. The SPARQL queries are defined following the computation specified in the SRI calculation sheet. Therefore, the results obtained with our framework are the same as those obtained with the calculation sheet.

While the performance computation is the main purpose of the framework proposed, the data created in the process is also valuable per se. By executing the queries in the query catalog, the method generates new data which can be directly added to the building model. The same applies to the data generated by the assessor via the user interface. Not only does this generated data contribute to the enrichment of the building's data model, but it also enables explainability for the SRI scores computed, as it provides links to the devices/equipment that enable the different functionality levels.

To better support inspection and auditing of a building's automation status, the present method generates a report on the performance computation. The report includes i) scores breakdown, ii) the equipment/functions found in the digital building representation, and iii) the assessment provided by the human expert. The reporting can serve as input to add on services that aid building owners/managers to analysis the building's performance and to identify most critical/beneficial upgrades.

## Claims

1. A Method for automatically computing the automation capabilities of a building, said method comprises the steps of:
-) automatically collecting, selecting, linking, structuring of building information based on different sources for the purpose of creating a consistent building semantic model
i) providing a plurality of calculation rules and creating an performance semantic model from said plurality of calculation rules and their structured application;
ii) creating a building semantic model and retrieving mappings between the performance semantic model and the building semantic models and optionally adding information about building's documentation to the retrieved mappings;
iii) providing a building digital representation for the existing building, said building digital representation being in the form of a semantic building model;
iv) computing the automation capabilities of a building w.r.t. the SRI services for the retrieved matches by using the available digital building representation to automatically retrieve building's capabilities that are relevant for the SRI computation;
v) providing a guided user interface for completing the assessment for building services that are not available in the digital building representation by suggesting relevant documents/schemas/plans to a human expert;
vi) computing and reporting the performance according to the SRI service, the scores at the different impact criteria and preferably as well as a justification for each score; and
vi) creating a system that continuously follows the process of computation of the automatic performance for a large set of buildings and proving a ranking based on specific SRI services and adjustable impact criteria.

2. The method according to claim 1, wherein the semantic building model is either natively available or is composed out of a building control system, in the latter case preferably using a dictionary to deduce terms out of the building control system for the generation of the semantic building model for the digital building representation.

3. The method according to claim 1 or 2, wherein the digital building representation, based on semantic models, is built up and structured such that it results in a machine-readable and linked form, preferably also including models for assets (building equipment), location (geometry) and even function models (containing functions and datapoints).

4. The method according to any of the preceding claims, wherein the digital building representation is based on an ontology model, thus being enabled to be extended to include further classes and properties.
